# EUROPEAN PATENT APPLICATION

(11) **EP 4 831 815 A1**
(43) Date of publication of application: **28.10.2026**
(21) Application number: 24919776.5
(22) Date of filing: 30.09.2024
(51) Int. Cl.: G06F 12/02

(54) **DATA ACCESS METHOD AND APPARATUS**

(30) Priority: 26.01.2024 CN 202410116760
(71) Applicant: Huawei Technologies Co., Ltd., Shenzhen, Guangdong 518129 (CN)
(72) Inventor: LIN, Qiangmin, Shenzhen, Guangdong 518129 (CN); LUAN, Jianhai, Shenzhen, Guangdong 518129 (CN); GUO, Hanjun, Shenzhen, Guangdong 518129 (CN)
(74) Representative: MERH-IP Matias Erny Reichl Hoffmann Patentanwälte PartG mbB
(86) International application number: PCT/CN2024/122944
(87) International publication number: WO 2025/156696

(57) **Abstract**

This application provides a data access method and an apparatus, relating to the field of computer technologies. The method includes: A processor obtains an access request of a first process, where the access request indicates an access process other than memory access; the processor allocates an access memory in a memory based on the access request, and provides a physical address of the access memory for the first process; and the processor obtains an access operation performed by the first process on the access memory based on the physical address, and responds to the access operation. This application simplifies a procedure in which an operating system responds to the access request of the first process, thereby improving efficiency of responding to the access request.

## Description

This application claims priority to Chinese Patent Application No. 202410116760.2, filed on January 26, 2024, and entitled "DATA ACCESS METHOD AND APPARATUS", which is incorporated herein by reference in its entirety.

### TECHNICAL FIELD

This application relates to the field of computer technologies, and in particular, to a data access method and an apparatus.

### BACKGROUND

With the development of technologies, it is increasingly common to implement application requirements through access by compute devices. For example, data exchange can be implemented between different processes on a compute device or between different compute devices through storage access or network access.

Currently, to implement access to a storage medium, after obtaining an access request for the storage medium, a kernel of an operating system needs to perform software processing by using a storage protocol stack or the like, to respond to the access request. Similarly, to implement access to a network interface card, after obtaining an access request for the network interface card, the kernel of the operating system needs to perform software processing by using a network protocol stack or the like, to respond to the access request.

However, a process in which the operating system responds to the access by using a software stack such as the storage protocol stack and the network protocol stack is complex, resulting in low efficiency in responding to the access request.

### SUMMARY

This application provides a data access method and an apparatus. This application simplifies a procedure in which an operating system responds to an access request of a first process, thereby reducing computational power overheads caused by responding to the access request, and improving efficiency of responding to the access request and computational efficiency of a first compute node. The technical solutions provided in this application are as follows:

According to a first aspect, this application provides a data access method. The method is applied to a processor of a first compute node. The first compute node further includes a memory. The method includes: The processor obtains an access request of a first process, where the access request indicates an access process other than memory access; the processor allocates an access memory in the memory based on the access request, and provides a physical address of the access memory for the first process; and the processor obtains an access operation performed by the first process on the access memory based on the physical address, and responds to the access operation.

In the data access method, the processor allocates the access memory to the first process, and the first process accesses the access memory, so that the first process can obtain, through the access memory, data that the access request indicates to access, and convert various types of access requirements of the first process into access operations for the access memory. For example, a plurality of types of access that need to be implemented by using a storage protocol stack and a network protocol stack are all converted into access to a memory. In this way, in a process of responding to the access request, an operating system of the first compute node does not need to perform software processing such as a corresponding protocol stack based on a specific access requirement of the first process, thereby simplifying a procedure in which the operating system responds to the access request of the first process, reducing computational power overheads caused by responding to the access request, and improving efficiency of responding to the access request and computational efficiency of the first compute node.

In a possible implementation solution, the first process is a process running on the processor. In this case, an implementation scenario of the data access method in this application may be considered as a scenario in which different processes on the first compute node access each other. In addition/Alternatively, the first process is a process running on a second compute node. In this case, an implementation scenario of the data access method in this application may be considered as a scenario in which the second compute node accesses the first compute node.

In a possible implementation scenario, after obtaining the access request, the processor may first perform a determining process, to determine whether the access memory needs to be allocated. In an implementation, in response to the first process being the process running on the second compute node, that the processor allocates the access memory in the memory based on the access request includes: When the first compute node and the second compute node are connected via a communication bus that supports memory semantics, the processor allocates the access memory in the memory based on the access request. In this case, the first compute node and the second compute node are connected via the communication bus that supports memory semantics, and that the processor responds to the access operation includes: The processor responds to the access operation based on the communication bus.

In this application, the access request indicates an access process other than memory access. In other words, the access request indicates any type of access other than memory access. For example, the access request indicates to access a file stored on the first compute node; and/or the access request indicates to transmit data with a second process running on the processor. In other words, the access request indicates to access a network interface card of the first compute node. In addition, the access request optionally indicates non-hard disk or network access, access to an accelerator (for example, an encryption/decryption accelerator), access to a security chip, and the like.

That the processor responds to the access operation means that the processor performs memory management based on the access type indicated by the access request. For example, when the access request indicates to read the file on the first compute node, that the processor responds to the access operation includes: The processor indicates the access memory to provide the first process with data that the first process needs to access. For example, when the access request indicates to access the file stored on the first compute node, that the processor responds to the access operation includes: The processor reads the file from a persistent storage medium into the access memory, performs an operation indicated by the access operation on the file stored in the access memory, and updates the file stored in the persistent storage medium based on a result of the operation. For another example, when the access request indicates to transmit the data to the second process running on the processor, if the access operation indicates the first process to receive target data from the second process, that the processor responds to the access operation includes: The processor indicates the second process to store the target data in the access memory, and provide the target data for the first process based on the access operation; or if the access operation indicates the first process to transmit target data to the second process, that the processor responds to the access operation includes: The processor stores the target data in the access memory, and provides the target data for the second process.

In a possible implementation solution, in response to the first process being the process running on the second compute node, before the processor provides the physical address of the access memory for the first process, the method further includes: The processor configures the second process, and establishes a communication connection between the second process and the first process; and that the processor provides the physical address of the access memory for the first process includes: The processor provides the physical address for the first process through the second process. When the first process is the process running on the first compute node, and the processor provides the second process to send the physical address to the first process, if the physical address is still sent to the first process running on the second compute node through the second process, compatibility and unification of intra-node communication and inter-node communication can be implemented in terms of local-node notification and cross-node notification, which facilitates horizontal scaling and vertical scaling of a distributed system.

In an implementation, the second process may immediately send the physical address to the first process after receiving the physical address. This implementation is equivalent to that the second process actively sends the physical address to the first process. In another implementation, the second process sends the physical address to the first process after receiving the physical address and receiving a query request sent by the first process. This implementation is equivalent to that the second process passively sends the physical address to the first process.

In a possible implementation solution, after the processor allocates the access memory in the memory, the method further includes: The processor configures access permission of the first process for the access memory. The access permission indicates an operation that can be performed by the first process when the first process accesses the access memory. For example, the access permission indicates that the first process can perform a read/write operation on the access memory. In this case, the access permission is borrow permission. The access permission indicates that the first process can perform a read-only operation on the access memory. In this case, the access permission is share permission. For example, when the physical address of the access memory is provided for a plurality of processes, the first process has read-only permission for the access memory; or when the physical address of the access memory is provided for one process, the first process has read/write permission for the access memory. Correspondingly, that the processor responds to the access operation includes: The processor responds to the access operation when the access operation satisfies the access permission.

The processor configures the access permission of the first process for the access memory, and responds to the access operation when the access operation of the first process satisfies the access permission, so that the access operation of the first process can be authenticated, and secure running of the access memory can be ensured.

In a possible implementation, the access permission is indicated by attribute information of the access request. The access permission may be determined by an inherent attribute of the first compute node. For example, when the first process triggers the access request by calling an access interface, if the access interface has an inherent attribute, the processor may determine the access permission of the first process for the access memory based on the inherent attribute. For example, when the inherent attribute of the access interface indicates access permission for access implemented through the interface, the processor may determine the access permission indicated by the inherent attribute as the access permission of the first process for the access memory. In addition, the attribute information indicating the inherent attribute may be carried in the access request.

In another implementation, the access permission may be determined based on data that the access request indicates to access. For example, when the data that the access request indicates to access needs to be provided for a plurality of processes, a conflict may occur when the plurality of processes access the data. In this case, the processor may configure the first process to have share permission for the access memory. When the data that the access request indicates to access needs to be provided for one process, an access conflict does not occur when a plurality of processes all access the access memory. In this case, the processor may configure the first process to have borrow permission for the access memory. For example, when the access memory needs to be provided for a plurality of processes to access, the physical address of the access memory needs to be provided for the plurality of processes. To avoid an access conflict that occurs when the plurality of processes access the access memory, the processor may configure the first process to have share permission for the access memory. When the access memory needs to be provided for one process to access, the physical address of the access memory needs to be provided for the one process. The access memory is used by the one process, and an access conflict does not occur when a plurality of processes all access the access memory. In this case, the processor may configure the first process to have borrow permission for the access memory.

According to a second aspect, this application provides a data access apparatus. The apparatus is used in a processor of a first compute node. The first compute node further includes a memory. The apparatus includes: an interaction module, configured to obtain an access request of a first process, where the access request indicates an access process other than memory access; an allocation module, configured to allocate an access memory in the memory based on the access request, and provide a physical address of the access memory for the first process; and a response module, configured to obtain an access operation performed by the first process on the access memory based on the physical address, and respond to the access operation.

In a possible implementation solution, the first process is a process running on the processor, and/or the first process is a process running on a second compute node.

In a possible implementation solution, in response to the first process being the process running on the second compute node, the allocation module is specifically configured to: when the first compute node and the second compute node are connected via a communication bus that supports memory semantics, allocate the access memory in the memory based on the access request.

In a possible implementation solution, the first compute node and the second compute node are connected via the communication bus that supports memory semantics, and the response module is specifically configured to respond to the access operation based on the communication bus.

In a possible implementation solution, the access request indicates to access a file stored on the first compute node, and/or the access request indicates to transmit data with a second process running on the processor.

In a possible implementation solution, in response to the access request indicating to access the file stored on the first compute node, the response module is specifically configured to: read the file from a persistent storage medium into the access memory, perform an operation indicated by the access operation on the file stored in the access memory, and update the file stored in the persistent storage medium based on a result of the operation.

In a possible implementation solution, in response to the access request indicating to transmit the data to the second process running on the processor, the response module is specifically configured to: when the access operation indicates to receive target data from the second process, indicate the second process to store the target data in the access memory, and provide the target data for the first process based on the access operation; or when the access operation indicates to transmit target data to the second process, store the target data in the access memory, and provide the target data for the second process.

In a possible implementation solution, in response to the first process being the process running on the second compute node, the allocation module is specifically configured to: configure the second process, and establish a communication connection between the second process and the first process; and provide the physical address for the first process through the second process.

In a possible implementation solution, the allocation module is specifically configured to send the physical address to the first process after receiving the physical address and receiving a query request sent by the first process.

In a possible implementation solution, the allocation module is specifically configured to configure access permission of the first process for the access memory; and the response module is specifically configured to respond to the access operation when the access operation satisfies the access permission.

In a possible implementation solution, when the physical address of the access memory is provided for a plurality of processes, the first process has read-only permission for the access memory; or when the physical address of the access memory is provided for one process, the first process has read/write permission for the access memory.

In a possible implementation solution, the access permission is indicated by attribute information of the access request.

According to a third aspect, this application provides a compute device, including a memory and a processor. The memory stores program instructions. The processor runs the program instructions to perform the method provided in any one of the first aspect and the possible implementations of the first aspect in this application.

According to a fourth aspect, this application provides a compute device cluster, including a plurality of compute devices. The plurality of compute devices include a plurality of processors and a plurality of memories, the plurality of memories store program instructions, and the plurality of processors run the program instructions, so that the compute device cluster performs the method provided in any one of the first aspect and the possible implementations of the first aspect in this application.

According to a fifth aspect, this application provides a computer-readable storage medium. The computer-readable storage medium is a non-volatile computer-readable storage medium. The computer-readable storage medium includes program instructions. When the program instructions are run on a compute device, the compute device is caused to perform the method provided in any one of the first aspect and the possible implementations of the first aspect in this application.

According to a sixth aspect, this application provides a computer program product including instructions. When the computer program product runs on a computer, the computer is caused to perform the method provided in any one of the first aspect and the possible implementations of the first aspect in this application.

Optionally, the computer program product is an operating system running on a processor of the computer device.

### BRIEF DESCRIPTION OF DRAWINGS

FIG. 1 is a diagram of a structure of an implementation scenario related to a data access method according to an embodiment of this application;
FIG. 2 is a diagram of a structure of another implementation scenario related to a data access method according to an embodiment of this application;
FIG. 3 is a flowchart of a data access method according to an embodiment of this application;
FIG. 4 is a diagram of a process in which a conventional operating system responds to file access by using a storage protocol stack according to an embodiment of this application;
FIG. 5 is a diagram of a process in which a conventional operating system sends data by using a network protocol stack according to an embodiment of this application;
FIG. 6 is a diagram of transmitting a physical address to a process on a second compute node via an IPI according to an embodiment of this application;
FIG. 7 is a diagram of implementing access by a first compute node and a second compute node through an access memory according to an embodiment of this application;
FIG. 8 is a diagram of a process of performing access by using a data access method in this application according to an embodiment of this application;
FIG. 9 is a diagram of mutual access between devices through an access memory according to an embodiment of this application;
FIG. 10 is a diagram of a data access apparatus according to an embodiment of this application;
FIG. 11 is a diagram of a structure of a compute device according to an embodiment of this application; and
FIG. 12 is a diagram of a structure of a compute device cluster according to an embodiment of this application.

### DESCRIPTION OF EMBODIMENTS

To make objectives, technical solutions, and advantages of this application clearer, the following further describes implementations of this application in detail with reference to the accompanying drawings.

With the development of technologies, it is increasingly common to implement application requirements through access by compute devices. For example, data exchange can be implemented between different processes on a compute device or between different compute devices through storage access or network access. Currently, to implement access to a storage medium, after obtaining an access request for the storage medium, a kernel (kernel) of an operating system needs to perform software processing by using a storage protocol stack or the like, to respond to the access request. Similarly, to implement access to a network interface card, after obtaining an access request for the network interface card, the kernel of the operating system needs to perform software processing by using a network protocol stack or the like, to respond to the access request. The kernel is the most basic part of the OS. The kernel is configured to allocate computational power resources of a processor in a form of processes, allocate physical memories in a form of virtual memories, and manage input/output (input/output, I/O) devices in a form of files.

However, a process in which the operating system responds to the access by using a software stack such as the storage protocol stack and the network protocol stack is complex, resulting in low efficiency in responding to the access request.

In addition, as performance of the network interface card, the storage medium, and the like improves, computational power consumed by the software stack (for example, a protocol stack) of the operating system (operating system, OS) becomes increasingly large. For example, in a scenario of accessing a conventional storage medium such as a hard disk drive (hard disk drive, HDD) and a solid state drive (solid state drive, SSD), 80% of the computational power is consumed by the storage medium and its interface, while 20% of the computational power is consumed by the operating system. However, in a scenario of accessing a new storage medium, 20% of the computational power is consumed by the storage medium and its interfaces, while 80% of the computational power is consumed by the kernel for performing software processing by using the storage protocol stack or the like. It can be learned that the kernel currently consumes a large proportion of the computational power for performing software processing by using the protocol stack or the like, making it a major factor affecting access performance. In addition, a plurality of operation processes need to be performed in a process in which the kernel uses the protocol stack. A process in which the kernel responds to the access by using the software stack is complex, resulting in low efficiency in responding to the access request. A memory is used in each operation process, which leads to a problem of redundancy in a plurality of channels in the process in which the protocol stack is used.

The industry continuously attempts to bypass the protocol stack through bypass technologies to maximize hardware performance. The bypass technologies mainly include the data plane development kit (data plane development kit, DPDK) and the persistent memory development kit (persistent memory development kit, PDMK).

DPDK is mainly composed of a DPDK lib library and a user-mode NIC driver. A service program is used through an application programming interface (application programming interface, API) in DPDK. To address a performance problem of a conventional socket (socket)-based method, DPDK improves an NIC capability through technologies such as huge pages, packet memory pre-allocation, polling, and multi-core concurrency. Its core technical solution is to bypass a protocol stack of the transmission control protocol (transmission control protocol, TCP)/internet protocol (internet protocol, IP) of the kernel to directly operate an NIC buffer (buffer) in user mode, and bypass a Linux kernel to copy a network forwarding packet on the kernel side and eliminate a software stack, thereby improving network forwarding efficiency. In CPU design, user mode (user mode) is a non-privileged state. In this state, executed code is restricted by hardware and cannot perform some operations. For example, writing into storage space of another process is restricted to prevent a security risk to the operating system. Similarly, in operating system design, user mode is also a non-privileged execution state. The kernel prohibits code in this state from performing potentially dangerous operations. For example, writing into a system configuration file is prohibited, killing of a process of another user is prohibited, or restarting of the system is prohibited.

PDMK is a library of development tools for using storage media with direct access (direct access, DAX) characteristics. A non-volatile memory (non-volatile memory, NVM) can be exposed directly to user space by using a file system with DAX enabled. In this way, a user-mode program may use a standard file system API to operate the NVM, and may also use mmap (a memory-mapped file method) to directly map the NVM to user space, so that operations on the NVM are directly converted into loading (load) and storage (store) of data in the NVM, without using page caching (page cache).

However, these technologies all aim to improve performance by bypassing the OS and reducing software stack consumption. They target a domain-specific scope and do not work on the OS. In addition, all of the foregoing pass-through technologies are about creating a new fast channel, instead of changing the OS design on the OS side. On this basis, to be compatible with network and storage access, the OS continues to retain the conventional network and storage protocol stacks, making the OS increasingly redundant.

In view of this, embodiments of this application provide a data access method. The method is applied to a processor of a first compute node. The first compute node further includes a memory. The method includes: The processor obtains an access request of a first process; the processor allocates an access memory in the memory based on the access request, and provides a physical address of the access memory for the first process; and the processor obtains an access operation performed by the first process on the access memory based on the physical address, and responds to the access operation. The access request indicates an access process other than memory access. In other words, the access request indicates any type of access other than memory access.

In the data access method, the processor allocates the access memory to the first process, and the first process accesses the access memory, so that the first process can obtain, through the access memory, data that the access request indicates to access, and convert various types of access requirements of the first process into access operations for the access memory. For example, a plurality of types of access that need to be implemented by using a storage protocol stack and a network protocol stack are all converted into access to a memory. In this way, in a process of responding to the access request, an operating system of the first compute node does not need to perform software processing such as a corresponding protocol stack based on a specific access requirement of the first process, thereby simplifying a procedure in which the operating system responds to the access request of the first process, reducing computational power overheads caused by responding to the access request, and improving efficiency of responding to the access request and computational efficiency of the first compute node.

In an implementation, the data access method is optionally performed by an operating system running on the processor or a kernel of the operating system. In this case, this application is equivalent to providing a new operating system or a kernel of the operating system. The operating system can convert an object of an access service, and expose a capability of the access memory to the first process, so that the first process can implement access by performing the access operation on the access memory. In addition, the operating system can implement file access, communication access, and the like. When responding to the access, the kernel side can implement copy-free and serialization-free conversion consumption, and can further decouple hardware used for access (for example, a storage medium used for file access and a network interface card used for network transmission). In this way, the operating system can convert various types of access processes such as a storage protocol stack access process, a network protocol stack access process, and a memory access process into memory access processes, which is equivalent to integrating the access processes such as the storage protocol stack access process, the network protocol stack access process, and the memory access process in the conventional operating system, and unifying the corresponding access processes into memory access, so as to be compatible with access acceleration of the access processes such as the storage protocol stack access process, the network protocol stack access process, and the memory access process, thereby eliminating redundancy in a plurality of operating systems caused by the use of a protocol stack. This helps make software stacks of conventional devices such as a disk and a network interface card more efficient, thereby implementing performance acceleration and simplifying the operating system.

The following describes in detail the technical solutions provided in this application from a plurality of perspectives such as an implementation scenario, a method procedure, a hardware apparatus, and a software apparatus. The implementation scenario of embodiments of this application is first described herein by using an example.

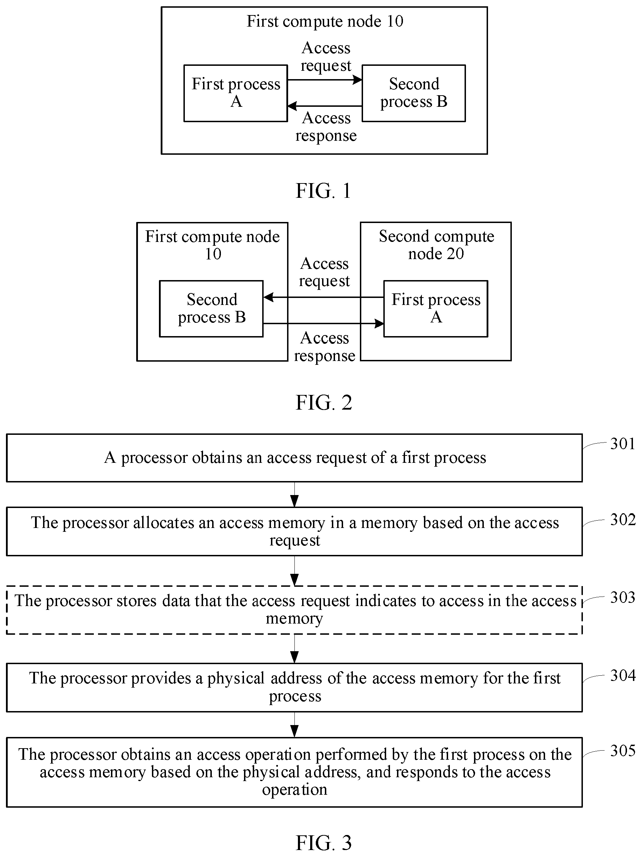

FIG. 1 is a diagram of a structure of an implementation scenario related to a data access method according to an embodiment of this application. As shown in FIG. 1, the implementation scenario includes a first compute node 10. The first compute node 10 includes a processor and a memory. Optionally, the first compute node 10 may be a physical machine, a cloud server, a bare metal server, or the like. For example, the implementation scenario shown in FIG. 1 is a data center, and the first compute node 10 is a server in the data center.

In the implementation scenario shown in FIG. 1, a first process A runs on the processor of the first compute node 10. When the first process A has an access requirement, the first process A triggers an access request. After obtaining the access request, the processor may allocate an access memory in the memory of the first compute node 10 based on the data access method provided in embodiments of this application, and provide a physical address of the access memory for the first process A, so that the first process A can access the access memory based on the physical address, and when performing an access operation on the access memory, the first process A can respond to the access operation, thereby implementing access of the first process A. In this case, the implementation scenario may be considered as a scenario of communication in the first compute node 10. For example, a second process B further runs on the processor of the first compute node 10. When the first process A needs to transmit data to the second process B, the first process A may trigger an access request, where the access request indicates to transmit the data to the second process B. After obtaining the access request, the processor allocates an access memory based on the access request, and provides a physical address of the access memory for the first process A, so that the first process A transmits the data to the second process B through the access memory. In this case, the implementation scenario may be considered as a scenario of communication between different processes on the first compute node 10.

FIG. 2 is a diagram of a structure of another implementation scenario related to a data access method according to an embodiment of this application. As shown in FIG. 2, the implementation scenario includes a first compute node 10 and at least one second compute node 20. Herein, FIG. 2 is a diagram of the implementation scenario including the first compute node 10 and one second compute node 20. Both the first compute node 10 and the second compute node 20 include a processor and a memory. A communication connection is established between the first compute node 10 and the second compute node 20. For example, the communication connection may be established between the first compute node 10 and the second compute node 20 over a network. Optionally, the network may be a local area network, the internet, or another network. This is not limited in embodiments of this application. In addition, to ensure that the second compute node 20 can perform an access operation on an access memory of the first compute node 10, a communication bus that supports memory semantics (memory semantics) is further connected between the first compute node 10 and the second compute node 20. For example, the communication bus is optionally a high-speed communication bus such as a compute express link (compute express link, CXL) bus or a LingQu bus (also referred to as a UB bus). Optionally, both the first compute node 10 and the second compute node 20 may be a physical machine, a cloud server, a bare metal server, or the like. For example, the implementation scenario shown in FIG. 2 is a data center, and both the first compute node 10 and the second compute node 20 are a server in the data center.

In the implementation scenario shown in FIG. 2, a first process A runs on the processor of the second compute node 20, and a second process B runs on the processor of the first compute node 10. When the first process A has an access requirement for accessing the first compute node 10, the first process A triggers an access request. After obtaining the access request, the processor of the first compute node may allocate an access memory in the memory of the first compute node 10 based on the data access method provided in embodiments of this application, and provide a physical address of the access memory for the first process A, so that the first process A can access the access memory based on the physical address, and when performing an access operation on the access memory, the first process A can respond to the access operation. In this way, the first process A can access the first compute node 10. For example, when the first process A needs to transmit data to the second process B, the first process A may send an access request to the first compute node, where the access request indicates to transmit the data to the second process B. After receiving the access request, the processor of the first compute node allocates an access memory based on the access request, and provides a physical address of the access memory for the first process A, so that the first process A transmits the data to the second process B through the access memory. In this case, the implementation scenario may be considered as a scenario of communication between compute nodes. For another example, when the first process A needs to access a file stored on the first compute node 10, the first process A may send an access request to the first compute node, where the access request indicates to access the file stored on the first compute node 10. After receiving the access request, the processor of the first compute node allocates an access memory based on the access request, and provides a physical address of the access memory for the first process A, so that the first process A accesses the file stored on the first compute node 10 through the access memory. In this case, the implementation scenario is a scenario in which the second compute node 20 accesses the file stored on the first compute node 10.

In an implementation, the data access method provided in embodiments of this application may be implemented by running an executable program by the compute node. For example, the executable program for the data access method may be presented in a form of an application installation package. After the application installation package is installed in the compute node, the data access method can be implemented by running the executable program.

In addition, the data access method provided in embodiments of this application is specifically performed by an operating system running on the processor. In this case, this application is equivalent to providing a new operating system. The new operating system can improve efficiency of responding to the access request and computational efficiency of the compute node, which helps improve computational power of the information and communications technology (information and communications technology, ICT) field.

There are at least two implementation forms of the operating system. In an implementation form, the operating system in this application is obtained by modifying a conventional operating system. In another implementation form, the operating system in this application is redesigned according to an implementation idea of the data access method provided in this application. When the operating system is redesigned, a network protocol stack, a storage protocol stack, and the like in a conventional operating system do not need to be designed in the operating system, so that the operating system can be simplified.

It should be understood that the foregoing content is an example description of the implementation scenario of the data access method provided in embodiments of this application, and does not constitute a limitation on the implementation scenario of the data access method. A person of ordinary skill in the art may learn that, as a service requirement changes, the implementation scenario of the data access method may be adjusted based on an application requirement. For example, the method may be further applied to non-hard disk or network access, access to an accelerator (for example, an encryption/decryption accelerator), access to a security chip, and the like, which are not listed one by one in embodiments of this application.

The following describes the data access method provided in embodiments of this application. FIG. 3 is a flowchart of a data access method according to an embodiment of this application. The method is applied to a first compute node. The first compute node includes a processor and a memory. As shown in FIG. 3, the data access method includes the following steps.

Step 301: The processor obtains an access request of a first process.

As described above, the first process is optionally a process running on the processor of the first compute node. In this case, an implementation scenario of the access method may be considered as a scenario of communication in the first compute node. For example, when a second process further runs on the processor of the first compute node, the access request is an access request sent by the first process to the second process, where the access request indicates the first process to transmit data with the second process. The implementation scenario may be considered as a scenario of communication between different processes on the first compute node.

In addition/Alternatively, the first process is optionally a process running on a second compute node. In this case, the implementation scenario may be considered as a scenario of access between compute nodes. For example, when the first process needs to transmit data with the second process, the first process sends an access request to the second process, where the access request indicates to transmit the data to the second process. In this case, the implementation scenario may be considered as a scenario of communication between compute nodes. For another example, when the first process needs to access a file stored on the first compute node, the first process sends an access request to the second process, where the access request indicates to access the file stored on the first compute node. In this case, the implementation scenario is a scenario in which the second compute node accesses the file stored on the first compute node. A communication connection is established between the first compute node and the second compute node. In addition, to ensure that the second compute node can perform an access operation on an access memory of the first compute node, a communication bus that supports memory semantics is connected between the first compute node and the second compute node. For example, the communication bus may be a high-speed communication bus such as a CXL bus or a UB bus.

The access request indicates an access process other than memory access. In other words, the access request indicates any type of access other than memory access. For example, according to the foregoing examples, the access request indicates to access a file stored on the first compute node, and/or the access request indicates to access a network interface card of the first compute node. In addition, the access request optionally indicates non-hard disk or network access, access to an accelerator (for example, an encryption/decryption accelerator), access to a security chip, and the like. This is not specifically limited in embodiments of this application.

In an implementation, the access request can indicate data that the first process requests to access. The indication function may be reflected by a virtual address (virtual address, VA). Optionally, the access request carries a virtual address, or the access request carries information indicating a virtual address. The virtual address indicates the data that the first process requests to access. For example, the access request that indicates to perform file access carries an index node (inode) number, a file size (file size), and a start address (start address) of the file, and the index node number, the file size, and the start address can indicate the virtual address. In this way, after obtaining the access request, the processor can obtain the virtual address from the access request, and determine, based on the virtual address, the data that the first process requests to access.

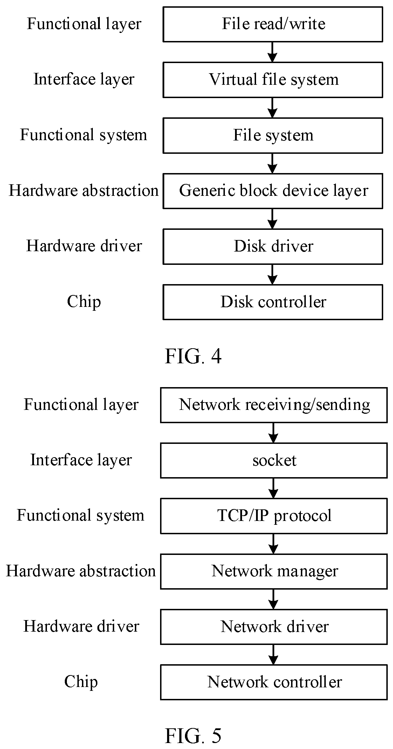

Optionally, the access request is optionally triggered by the first process by calling an interface layer of a conventional operating system. For example, as shown in FIG. 4, when the access request indicates the first process to access the file stored on the first compute node, the access request is optionally triggered by the first process by calling an API of a virtual file system (virtual file system) of the conventional operating system. In this case, it is equivalent to intercepting a read (read)/write (write) instruction of conventional file access on a kernel side, and responding to the read/write instruction by using the data access method provided in embodiments of this application. For another example, as shown in FIG. 5, when the access request indicates the first process to transmit data with the second process, the access request is optionally triggered by the first process by calling a socket (socket) interface of a conventional operating system. In this case, it is equivalent to intercepting, on a kernel side, a send (send)/receive (receive) instruction transmitted in a conventional network, and responding to the send/receive instruction by using the data access method provided in embodiments of this application. When the access request is triggered by the first process by calling an interface layer of the conventional operating system, the first process can trigger the access request through an original API of the conventional operating system, so as to ensure that conventional access triggering processes such as file read/write and network packet receiving/sending remain unchanged. In this way, an application running in the operating system can implement decoupling of the call by using the data access method provided in this application, and can be compatible with the original API (such as a read/write API) of the conventional operating system.

Step 302: The processor allocates an access memory in the memory based on the access request.

After obtaining the access request of the first process, the processor can allocate the access memory in the memory of the first compute node based on the access request, so that the first process can access the access memory to implement access indicated by the access request. Optionally, the processor first estimates, based on data carried in the access request, a capacity of access memory required for implementing the access request, and then applies for the access memory of the capacity in the memory, to allocate the access memory. In an implementation, the access request carries a virtual address, and the processor may determine, based on a mapping relationship between a virtual address and a physical address, a physical address corresponding to the virtual address, and determine a capacity of the access memory based on a size of data recorded in the physical address.

Optionally, after obtaining the access request, the processor may first perform a determining process, to determine whether the access memory needs to be allocated. In an implementation, when the first process has a capability of performing an access operation on the access memory, the processor allocates the access memory in the memory based on the access request. For example, when the first process is the process running on the first compute node, the processor determines that the first process has the capability of performing an access operation on the access memory. When the first process is the process running on the second compute node, if the first compute node and the second compute node are connected via a communication bus that supports memory semantics, and the first process can access the access memory based on the communication bus, the processor determines that the first process has the capability of performing an access operation on the access memory. When the first process has the capability of performing an access operation on the access memory, the processor determines to respond to the access request of the first process in a manner of responding to the access request by using the conventional operating system, and not to allocate the access memory based on the access request. For example, when no communication bus that supports memory semantics is connected between the first compute node and the second compute node, the processor can determine that the first process does not have the capability of performing an access operation on the access memory. In this case, if the access request indicates the first process to transmit the data to the second process, the access request is responded to in a current manner of transmitting data by using a network protocol stack. If the access request indicates the first process to access the file stored on the first compute node, the access request is responded to in a current manner of implementing file access by using a file protocol stack. In an implementation scenario, when the processor is compatible with the conventional operating system and the operating system provided in this application, or the operating system has both a function of the conventional operating system and a function of the data access method provided in this application, after receiving the access request, the operating system needs to perform determining based on the foregoing logic, and respond to the access request in a corresponding response manner based on a determining result.

Further, after the processor applies for the access memory in the memory, the processor can further configure access permission of the first process for the access memory, to ensure secure running of the access memory. The access permission indicates an operation that can be performed by the first process when the first process accesses the access memory. For example, the access permission indicates that the first process can perform a read/write operation on the access memory. In this case, the access permission is borrow permission. The access permission indicates that the first process can perform a read-only operation on the access memory. In this case, the access permission is share permission.

In a first implementation, the access permission may be determined by an inherent attribute of the first compute node. For example, when the first process triggers the access request by calling an access interface, if the access interface has an inherent attribute, the processor may determine the access permission of the first process for the access memory based on the inherent attribute. For example, when the inherent attribute of the access interface indicates access permission for access implemented through the interface, the processor may determine the access permission indicated by the inherent attribute as the access permission of the first process for the access memory. In addition, the attribute information indicating the inherent attribute may be carried in the access request.

In a second implementation, the access permission may be determined based on data that the access request indicates to access. For example, when the data that the access request indicates to access needs to be provided for a plurality of processes, a conflict may occur when the plurality of processes access the data. In this case, the processor may configure the first process to have share permission for the access memory. When the data that the access request indicates to access needs to be provided for one process, an access conflict does not occur when a plurality of processes all access the access memory. In this case, the processor may configure the first process to have borrow permission for the access memory. For example, when the access memory needs to be provided for a plurality of processes to access, the physical address of the access memory needs to be provided for the plurality of processes. To avoid an access conflict that occurs when the plurality of processes access the access memory, the processor may configure the first process to have share permission for the access memory. When the access memory needs to be provided for one process to access, the physical address of the access memory needs to be provided for the one process. The access memory is used by the one process, and an access conflict does not occur when a plurality of processes all access the access memory. In this case, the processor may configure the first process to have borrow permission for the access memory.

It should be noted that the first implementation and the second implementation of determining the access permission may be used separately or in combination. For example, when the first implementation and the second implementation are used in combination, the processor may preferentially determine the access permission based on the inherent attribute of the first compute node, and when the inherent attribute does not indicate the access permission, the processor determines the access permission in the second implementation. In addition, the first implementation and the second implementation are examples of implementations of determining the access permission, and are not intended to limit the implementations. For example, the access permission may also be determined based on factors such as a priority of a process that accesses the access memory.

In an implementation, in a process of allocating the access memory based on the access request, the processor optionally performs unified management on the memory based on a mapping table. In a process of performing step 302, the processor may first determine, based on the access request, information such as a virtual address, a physical address (physical address, PA), and an access type (type) that the access request indicates to access, and then establish a mapping table based on the information. After completing allocation of the access memory, based on a status of the allocation of the access memory, the processor optionally completes the mapping table based on an access mode of the access indicated by the access request, ownership information (owner) of a memory used to store the data indicated by the access request, and the like. For example, after obtaining the information such as the virtual address, the physical address, and the access type, the processor may apply for an independent page table, and record a correspondence between the information by using the page table. For example, as shown in Table 1, when the mapping table represents a correspondence between the virtual address, the physical address, the access type, the access mode, and the ownership information, the correspondence is represented by using a five-dimensional page table. The physical address indicates a physical memory block that stores data indicated by the virtual address. The access type indicates an access requirement. For example, type "file" in Table 1 indicates an access requirement that the first process needs to access the file stored on the first compute node. Type "socket" in Table 1 indicates an access request that the first process needs to transmit the data. The access mode includes: an access response is made in a manner of sharing an access memory, an access response is made in a manner of borrowing an access memory, and an access response is made in a manner of responding to an access request by using a conventional operating system. When the access response is made through the access memory, the mapping table records access permission of the access memory, for example, "share" in the third column of the second row and the sixth row and "borrow" in the third column of the fifth row in Table 1. Because physical address PA1 needs to be provided for two processes, an access mode of physical address PA1 is "share". When the access request is responded to by using the conventional operating system, because this case usually occurs in cross-node access, the mapping table records a network address (network address, NA) of the second compute node, for example, "NA1" and "NA2" in the third column of the third row and the fourth row in Table 1. A network address is used to identify a compute node, and the network address is optionally any identification information that can represent the compute node. For example, the network address is an IP address.

**Table 1**

| Virtual address | Physical address | Access mode | Ownership information | Access Type |
|---|---|---|---|---|
| VA1 | PA1 | Share | First compute node | file |
| VA2 | PA2 | NA1 | First compute node | file |
| VA3 | PA3 | NA2 | First compute node | socket |
| VA4 | PA4 | Borrow | First compute node | socket |
| VA5 | PA1 | Share | First compute node | socket |

The processor performs unified management on the memory based on the mapping table, so that a cache page on the kernel side can be mapped to implement memory page mapping that is transparent to a service. This helps support direct data transfer through the access memory. In addition, various types of access can be further distinguished by using the mapping table, so as to distinguish different access requirements. In addition, because the mapping table records the physical address of the physical memory block that stores the data, it is unnecessary to reflect a difference between different storage media, thereby implementing unified management of heterogeneous memory media.

Step 303: The processor stores the data that the access request indicates to access in the access memory.

After obtaining the access request, the processor can determine, based on the access request, the data that the access request indicates to access. Then, the processor can obtain the data from the first compute node, and store the data in the access memory, so that the first process reads the data from the access memory. The access request carries the virtual address, and the processor may determine, based on the virtual address, the data that the access request indicates to access. In an implementation, when the access request indicates to access the file on the first compute node, the processor optionally determines a metadata area (metadata area) of the file based on the virtual address carried in the access request, determine a data area (data area) of the file based on metadata recorded in the metadata area, and obtain, from the data area, the data that the access request indicates to access. When the access request indicates the first process to transmit the data to the second process, the processor optionally determines, based on the virtual address carried in the access request, a buffer used by the network interface card, and obtain buffered data (buffer data) from the buffer, to obtain the data that the access request indicates to access.

It should be noted that step 303 is an optional execution step in the access scenario. For example, when the access request indicates that the first process needs to obtain data by using the access request, the processor may perform step 303, to store the data that the access request indicates to access in the access memory. When the access request indicates that the first process needs to write data into the first compute node by using the access request, the processor does not need to perform step 303.

Step 304: The processor provides the physical address of the access memory for the first process.

There are a plurality of implementations in which the processor provides the physical address for the first process. For example, when the first process is the process running on the first compute node, the processor may directly send the physical address to the first process over a network. Alternatively, the processor optionally sends the physical address to the first process via an inter-processor interrupt (inter-processor interrupt, IPI). The IPI is an inter-core notification message generated by an interrupt clear register (interrupt clear register, ICR), and the IPI may be sent between processes via a system bus (system bus). A destination shorthand (destination shorthand) field of the ICR sets an overall target type to a target field (destination field), and the target field indicates a destination of the IPI.

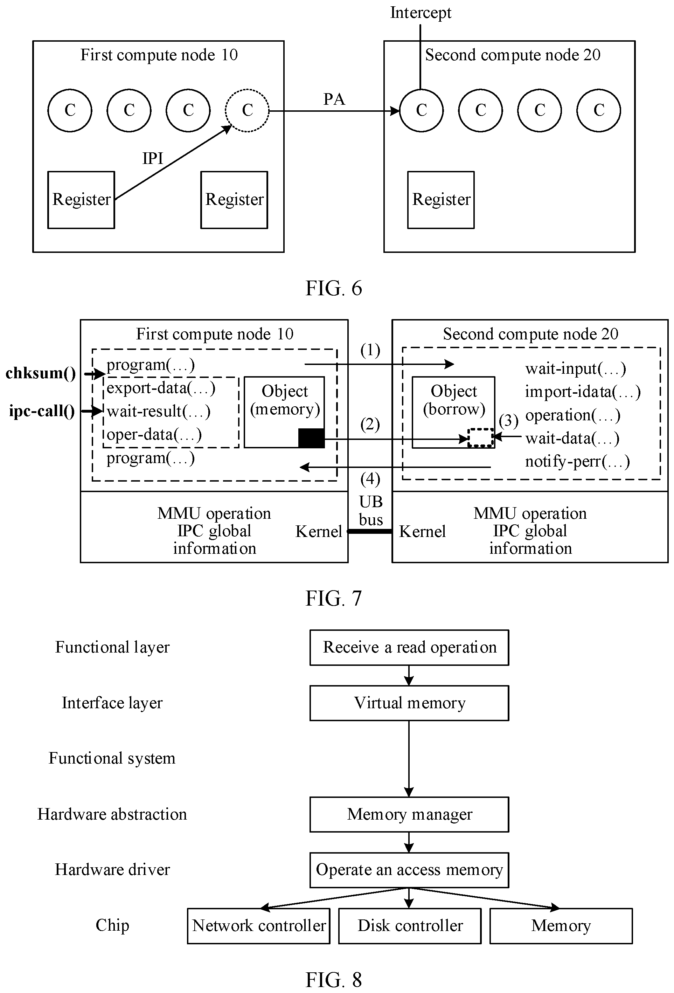

Similarly, when the first process is the process running on the second compute node, the processor may directly send the physical address to the first process over a network. Alternatively, the processor optionally provides the physical address for the first process via an IPI. In an implementation, when the first process is the process running on the second compute node, before the processor provides the physical address for the first process, the second process is first configured in the processor, and a communication connection is established between the second process and the first process. After completing allocation of the access memory, the processor optionally first provides the physical address for the second process via the IPI, and then provides the physical address for the first process through the second process. As shown in FIG. 6, configuring the second process in the processor is equivalent to creating a "shadow core" for the first process on the first compute node. The second process is configured to obtain, from the first compute node, a message sent to the first process, and transfer the message to the first process. In FIG. 6, "C" represents a processor core, a processor core represented by a solid line is hardware actually owned by a compute node, and a processor core represented by a dashed line is virtual. It should be noted that, after the second process is configured on the first compute node and the communication connection is established between the second process and the first process, if a message needs to be sent to the second process via the IPI, the second process further needs to be included in an IPI notification interrupt service routine.

In an implementation, the second process may immediately send the physical address to the first process after receiving the physical address. This implementation is equivalent to that the second process actively sends the physical address to the first process. In another implementation, the second process sends the physical address to the first process after receiving the physical address and receiving a query request sent by the first process. This implementation is equivalent to that the second process passively sends the physical address to the first process. Optionally, the first process may request the physical address from the second process in a polling manner. The physical address provided by the second process for the first process is optionally sent over a network or via a bus between the first compute node and the second compute node.

When the first process is the process running on the first compute node, and the processor sends the physical address to the first process via the IPI, if the physical address is still sent to the first process running on the second compute node via the IPI, compatibility and unification of intra-node communication and inter-node communication can be implemented in terms of local-node notification and cross-node notification. In addition, when compatibility and unification of intra-node communication and inter-node communication are implemented in a distributed system via the IPI, horizontal scaling (scale horizontally, also referred to as scale out) and vertical scaling (scale vertically, also referred to as scale up) of the distributed system are further facilitated. The horizontal scaling is used to add a new node to the distributed system to increase an overall scale of the distributed system. For example, horizontal scaling of the distributed system includes adding a new compute node to a distributed system for implementing a web (web) or mail service. Vertical scaling is used to add a hardware configuration to a single compute node in the distributed system to increase a service capability of the single node in the distributed system, for example, to add a CPU and a memory to the compute node in the distributed system.

Step 305: The processor obtains an access operation performed by the first process on the access memory based on the physical address, and responds to the access operation.

That the processor responds to the access operation means that the processor performs memory management based on the access type indicated by the access request. For example, when the access request indicates to read the file on the first compute node, that the processor responds to the access operation includes: The processor indicates the access memory to provide the first process with data that the first process needs to access. For example, when the access request indicates to access the file stored on the first compute node, that the processor responds to the access operation includes: The processor reads the file from a persistent storage medium into the access memory, performs an operation indicated by the access operation on the file stored in the access memory, and updates the file stored in the persistent storage medium based on a result of the operation. Optionally, the operation indicated by the access request is adding a file, deleting a file, querying a file, and modifying a file. For another example, when the access request indicates to transmit the data to the second process running on the processor, if the access operation indicates the first process to receive target data from the second process, that the processor responds to the access operation includes: The processor indicates the second process to store the target data in the access memory, and provide the target data for the first process based on the access operation; or if the access operation indicates the first process to transmit target data to the second process, that the processor responds to the access operation includes: The processor stores the target data in the access memory, and provides the target data for the second process.

In addition, when the first compute node and the second compute node are connected via the communication bus that supports memory semantics, and the processor responds to the access operation, the processor optionally responds to the access operation based on the communication bus. For example, the processor transmits data stored in the access memory to the first process via the communication bus, or the processor receives, via the communication bus, data written by the first process into the access memory. In addition, when the processor configures the access permission of the first process for the access memory in a process of allocating the access memory, the processor further needs to verify whether the access operation of the first process satisfies the access permission when responding to the access operation. The processor performs the access operation only when the access operation is within a range allowed by the access permission. The processor prohibits specifying the access operation when the access operation is not within the range allowed by the access permission.

The following describes, by using a specific example, an implementation process of the data access method provided in embodiments of this application.

As shown in FIG. 7, the first compute node and the second compute node are connected via the UB bus. When the first process on the second compute node needs to access data on the first compute node, the first process may send an access request to the first compute node. After receiving the access request, the first compute node allocates an access memory based on the access request, and provides a physical address of the access memory for the first process. An arrow marked with (1) in FIG. 7 indicates that the processor of the first compute node provides the physical address of the access memory for the first process. After receiving the physical address, the first process may consider the access memory as its memory based on the physical address, to implement borrowing of the access memory. This process is shown by an arrow marked with (2) in FIG. 7. Then, the first process may write data into the access memory based on the physical address. This process is shown by an arrow marked with (3) in FIG. 7. After completing access to the access memory, the first process may send, to the first compute node, a message indicating that the access is completed. This process is shown by an arrow marked with (4) in FIG. 7. After receiving the message indicating that the access is completed sent by the first process, the first compute node may perform a synchronization operation on the first compute node based on an access result of the first process. For example, when the first process performs the operation indicated by the access operation on the file stored in the access memory, the synchronization operation performed by the processor includes: updating the file stored in the persistent storage medium based on an operation result of the first process. Then, the processor may query whether the access memory is still being used by another process, and if the access memory is not being used by the another process, the processor may release the access memory.

FIG. 4 is a diagram of a process in which a conventional operating system responds to file access by using a storage protocol stack according to an embodiment of this application. As shown in FIG. 4, after receiving an access request, a first compute node triggers the operating system to respond through an API of a file system. After receiving the request triggered by the first compute node, the operating system sequentially transfers the request to a virtual file system, a file system, a generic block device (block device) layer, a disk driver (disk driver), and a disk (disk controller) according to the storage protocol stack, to implement access to a file stored in a hard disk.

FIG. 5 is a diagram of a process in which a conventional operating system sends data by using a network protocol stack according to an embodiment of this application. As shown in FIG. 5, after receiving an access request indicating network receiving/sending, a first compute node transmits to-be-sent data to the operating system through a socket interface, to trigger the operating system to respond. The operating system constructs a TCP header (header), a TCP packet segment (segment), and the like used for transmission according to the network protocol stack and the TCP protocol, and adds an IP header to a packet, performs routing processing, and the like according to the IP protocol. Then, the operating system sequentially transmits the access request to a network manager (network manager), a network driver (network driver), and a network controller (network controller), and then performs data transmission according to an indication of the network controller.

FIG. 8 is a diagram of a process of performing access by using a data access method according to an embodiment of this application. When a second process on a first compute node receives an access request of a first process, and needs to transmit data with the first process based on the access request, the second process first calls a socket interface, to apply for an access memory through the socket interface, and write, into an access address, the data that needs to be transmitted to the first process, and then provides a physical address of the access memory for the first process through the socket interface. Then, a processor performs memory management on the access memory. As shown in FIG. 8, after receiving a read operation of the first process, the processor reads the access memory based on the read operation through a virtual memory and a memory manager. Similarly, when the first process needs to access a file stored on the first compute node, the first compute node also responds according to similar logic.

By comparing FIG. 8 with FIG. 4 and FIG. 5, it can be learned that: According to the data access method provided in embodiments of this application, an object of an access service is converted, and a capability of the access memory is exposed to the first process, so that the first process can implement access by performing the access operation on the access memory, thereby implementing file access, communication access, and the like. When responding to the access, the kernel side can implement copy-free and serialization-free conversion consumption, and can further decouple hardware used for access (for example, a storage medium used for file access and a network interface card used for network transmission). In addition, according to the method, when conventional access triggering processes such as file read/write and network packet receiving/sending remain unchanged, the operating system can convert various types of access processes such as a storage protocol stack access process, a network protocol stack access process, and a memory access process into memory access processes, which is equivalent to integrating the storage protocol stack access process, the network protocol stack access process, and the memory access process in the conventional operating system, and unifying the corresponding access processes into memory access, so as to be compatible with access acceleration of the access processes such as the storage protocol stack access process, the network protocol stack access process, and the memory access process, thereby eliminating redundancy caused by the use of a protocol stack. This helps make software stacks of conventional devices such as a disk and a network interface card more efficient, thereby implementing performance acceleration and simplifying the operating system.

In this application, when the first process is a process running on the second compute node, the data access method provided in embodiments of this application can be applied to a distributed scenario. In this case, different nodes in a distributed system can access each other by using the data access method provided in embodiments of this application. In this way, data can be directly transferred between the different nodes in the distributed system through the access memory, and various types of access requirements of the first process can be converted into access operations on the memory. Further, a scale-up capability of a single-node service process in the distributed system can be further supported, so that a programming model of a single-node process is unified with that of a distributed process, and implementation difficulty of scaling the distributed system is greatly reduced.

It can be learned from the foregoing descriptions that, in the data access method provided in embodiments of this application, the processor allocates the access memory to the first process, and the first process accesses the access memory, so that the first process can obtain, through the access memory, data that the access request indicates to access, and convert various types of access requirements of the first process into access operations for the access memory. For example, a plurality of types of access that need to be implemented by using a storage protocol stack and a network protocol stack are all converted into access to a memory. In this way, in a process of responding to the access request, an operating system of the first compute node does not need to perform software processing such as a corresponding protocol stack based on a specific access requirement of the first process, thereby simplifying a procedure in which the operating system responds to the access request of the first process, reducing computational power overheads caused by responding to the access request, and improving efficiency of responding to the access request and computational efficiency of the first compute node.

In addition, in this application, a same mode can be used to respond to access processes of single-node inter-process communication (inter-process communication, IPC) and multi-node remote procedure call (remote procedure call, RPC), so that integration and normalization of IPC and RPC can be implemented, thereby simplifying programming modes of a single-node process and a distributed process. In addition, pass-through access is performed on the access memory through the first process, so that regardless of the size, sparsity, or density of data that needs to be accessed, the access is implemented by performing an operation on the access memory, thereby ensuring consistent access efficiency for data of different size, sparsity, or density. When the access memory manages data according to a page (page) granularity, the access manner can further implement access at a page granularity, and can be compatible with large-block data migration of direct memory access (direct memory access, DMA), thereby improving efficiency of sparse random access. RPC, that is, remote procedure call, is a method for requesting a service from a remote computer program over a network, allowing obtaining data in a computer process without needing to understand a protocol of an underlying network technology. RPC makes it easier to develop applications including distributed applications. IPC refers to a process of data exchange between processes.

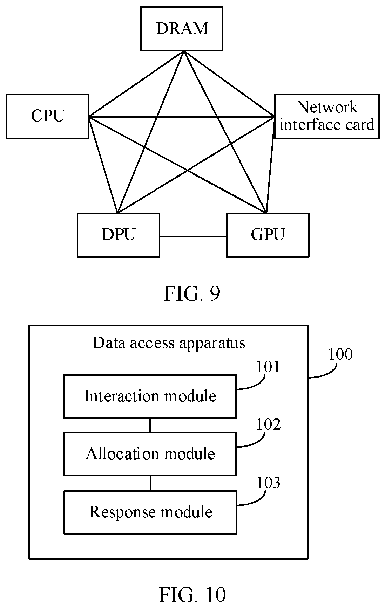

In addition, in this application, a process in which the processor allocates the access memory to the first process may be considered as a process in which the access memory is configured as a pass-through memory of the first process. The process provides a capability of the access memory for a process in a node and another node. In this way, according to the data access method provided in embodiments of this application, a process in which the processor accesses another node may be considered as access to a memory. Compared with a current method in which a CPU on a compute node can access only a memory on the compute node to which the CPU belongs, according to the data access method provided in embodiments of this application, the compute node can further access a device in another node through the access memory, and the access is not limited to access of the CPU, and is also applicable to mutual access between other devices. For example, as shown in FIG. 9, any two of a CPU, a data processing unit (data processing unit, DPU), a graphics processing unit (graphics processing unit, GPU), a dynamic random access memory (dynamic random access memory, DRAM), and a network interface card can also access each other.

It should be noted that a sequence of steps in the data access method provided in embodiments of this application may be appropriately adjusted, and a step may be correspondingly added or deleted based on a situation. Any variation method readily figured out by a person skilled in the art within the technical scope disclosed in this application shall fall within the protection scope of this application. Therefore, details are not described herein.

The following describes a virtual apparatus in embodiments of this application by using an example.

The foregoing describes the data access method in embodiments of this application. In correspondence with the foregoing method, an embodiment of this application further provides a data access apparatus. FIG. 10 is a diagram of a structure of a data access apparatus according to an embodiment of this application. Based on the following plurality of components shown in FIG. 10, the data access apparatus shown in FIG. 10 can perform all or some of the operations shown in FIG. 3. It should be understood that the apparatus may include more additional components than the components shown in the figure, or some components shown in the figure may be omitted. This is not limited in embodiments of this application. Optionally, the apparatus is used in a processor of a first compute node. The first compute node further includes a memory. As shown in FIG. 10, the data access apparatus 100 may include:
an interaction module 101, configured to obtain an access request of a first process, where the access request indicates an access process other than memory access;
an allocation module 102, configured to allocate an access memory in the memory based on the access request, and provide a physical address of the access memory for the first process; and
a response module 103, configured to obtain an access operation performed by the first process on the access memory based on the physical address, and respond to the access operation.

In a possible implementation solution, the first process is a process running on the processor, and/or the first process is a process running on a second compute node.

In a possible implementation solution, in response to the first process being the process running on the second compute node, the allocation module 102 is specifically configured to: when the first compute node and the second compute node are connected via a communication bus that supports memory semantics, allocate the access memory in the memory based on the access request.

In a possible implementation solution, the first compute node and the second compute node are connected via the communication bus that supports memory semantics, and the response module 103 is specifically configured to respond to the access operation based on the communication bus.

In a possible implementation solution, the access request indicates to access a file stored on the first compute node, and/or the access request indicates to transmit data with a second process running on the processor.

In a possible implementation solution, in response to the access request indicating to access the file stored on the first compute node, the response module 103 is specifically configured to: read the file from a persistent storage medium into the access memory, perform an operation indicated by the access operation on the file stored in the access memory, and update the file stored in the persistent storage medium based on a result of the operation.

In a possible implementation solution, in response to the access request indicating to transmit the data to the second process running on the processor, the response module 103 is specifically configured to: when the access operation indicates to receive target data from the second process, indicate the second process to store the target data in the access memory, and provide the target data for the first process based on the access operation; or when the access operation indicates to transmit target data to the second process, store the target data in the access memory, and provide the target data for the second process.

In a possible implementation solution, in response to the first process being the process running on the second compute node, the allocation module 102 is specifically configured to: configure the second process, and establish a communication connection between the second process and the first process; and provide the physical address for the first process through the second process.

In a possible implementation solution, the allocation module 102 is specifically configured to send the physical address to the first process after receiving the physical address and receiving a query request sent by the first process.

In a possible implementation solution, the allocation module 102 is specifically configured to configure access permission of the first process for the access memory; and the response module 103 is specifically configured to respond to the access operation when the access operation satisfies the access permission.

In a possible implementation solution, when the physical address of the access memory is provided for a plurality of processes, the first process has read-only permission for the access memory; or when the physical address of the access memory is provided for one process, the first process has read/write permission for the access memory.

In a possible implementation solution, the access permission is indicated by attribute information of the access request.

Herein, for a detailed working process of the interaction module 101, the allocation module 102, and the response module 103, refer to the descriptions in the foregoing method embodiment. For example, the interaction module 101 obtains the access request of the first process in the implementation described in step 301 in the method. The allocation module 102 allocates the access memory in the memory based on the access request, and provides the physical address of the access memory for the first process in the implementations described in step 302 and step 304 in the method. The response module 103 obtains the access operation performed by the first process on the access memory based on the physical address, and responds to the access operation in the implementation described in step 305 in the method. Details are not described again in embodiments of this application.

In conclusion, in the data access apparatus provided in embodiments of this application, the allocation module allocates the access memory to the first process, and the first process accesses the access memory, so that the first process can obtain, through the access memory, data that the access request indicates to access, and convert various types of access requirements of the first process into access operations for the access memory. For example, a plurality of types of access that need to be implemented by using a storage protocol stack and a network protocol stack are all converted into access to a memory. In this way, in a process of responding to the access request, an operating system of the first compute node does not need to perform software processing such as a corresponding protocol stack based on a specific access requirement of the first process, thereby simplifying a procedure in which the operating system responds to the access request of the first process, reducing computational power overheads caused by responding to the access request, and improving efficiency of responding to the access request and computational efficiency of the first compute node.

It can be clearly understood by a person skilled in the art that, for the purpose of convenient and brief description, for detailed working processes of the foregoing components, refer to corresponding content in the foregoing method embodiments. Details are not described herein again.

The following describes a basic hardware structure in embodiments of this application by using an example.

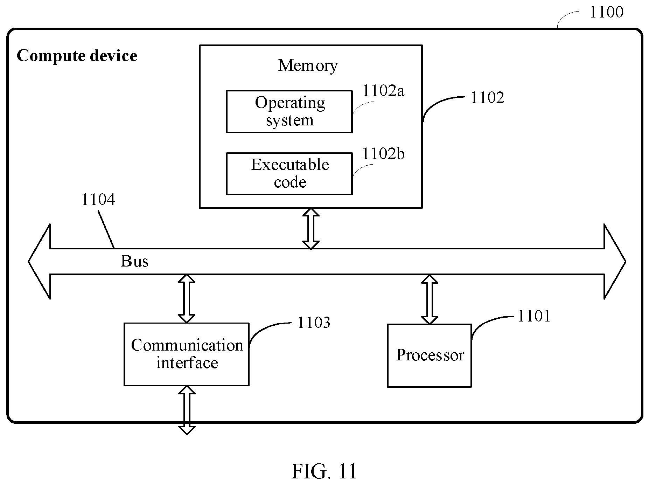

An embodiment of this application provides a compute device. The compute device is configured to implement some or all functions of the data access method provided in embodiments of this application. FIG. 11 is a diagram of a structure of a compute device according to an embodiment of this application. As shown in FIG. 11, the compute device 1100 includes a processor 1101, a memory 1102, a communication port 1103, and a bus 1104. The processor 1101, the memory 1102, and the communication port 1103 are communicatively connected via the bus 1104.

The processor 1101 may include a general-purpose processor and/or a dedicated hardware chip. The general-purpose processor may include a central processing unit (central processing unit, CPU), a microprocessor, or a graphics processing unit (graphics processing unit, GPU). For example, the CPU is a single-core processor (single-CPU), or a multi-core processor (multi-CPU). The dedicated hardware chip is a hardware module capable of performing high-performance processing. The dedicated hardware chip includes at least one of a digital signal processor, an application-specific integrated circuit (application-specific integrated circuit, ASIC), a field-programmable gate array (field-programmable gate array, FPGA), or a network processor (network processor, NP). The processor 1101 may alternatively be an integrated circuit chip and has a signal processing capability. In an implementation process, some or all functions of the data access method in this application may be completed through a hardware integrated logic circuit in the processor 1101 or by using instructions in a form of software.

The memory 1102 is configured to store a computer program, and the computer program includes an operating system 1102a and executable code (namely, program instructions) 1102b. For example, the memory 1102 is a read-only memory, another type of static storage device that can store static information and instructions, a random access memory, another type of dynamic storage device that can store information and instructions, an electrically erasable programmable read-only memory, a compact disc read-only memory, other optical disk storage, optical disc storage (including a compact disc, a laser disc, an optical disc, a digital versatile disc, a Blu-ray disc, or the like), a magnetic disk storage medium, another magnetic storage device, or any other medium that can be used to carry or store expected executable code in a form of instructions or a data structure and that can be accessed by a computer, but is not limited thereto. For example, the memory 1102 is configured to store an egress queue. For example, the memory 1102 exists independently, and is connected to the processor 1101 via the bus 1104. Alternatively, the memory 1102 is integrated with the processor 1101. The memory 1102 may store executable code. When the executable code stored in the memory 1102 is executed by the processor 1101, the processor 1101 is configured to perform some or all functions of the data access method provided in embodiments of this application. For an implementation of performing the process by the processor 1101, accordingly refer to related descriptions in the foregoing embodiments. The memory 1102 may further include another software module, data, and the like, for example, an operating system, for running a process.

The communication port 1103 uses a transceiver module, for example, but not limited to a transceiver, to implement communication with another device or a communication network. For example, the communication port 1103 may be any one or any combination of the following components having a network access function: a network interface (for example, an Ethernet interface) and a wireless network interface card.

The bus 1104 is any type of communication bus configured to implement interconnection between internal components (for example, the memory 1102, the processor 1101, and the communication port 1103) in the compute device, for example, a system bus. In embodiments of this application, an example in which the foregoing components in the compute device are interconnected via the bus 1104 is used for description. Optionally, the foregoing components in the compute device 1100 may be communicatively connected in a connection manner other than via the bus 1104. For example, the foregoing components in the compute device 1100 are interconnected through an internal logical interface.

It should be noted that the foregoing plurality of components may be separately disposed on chips independent of each other, or at least some or all of the components may be disposed on a same chip. Whether the components are separately disposed on different chips or integrated and disposed on one or more chips usually depends on a requirement of a product design. Embodiments of this application impose no limitation on specific implementations of the foregoing components. Descriptions of procedures corresponding to the foregoing accompanying drawings have respective focuses. For a part that is not described in detail in a procedure, refer to related descriptions of other procedures.

All or some of the foregoing embodiments may be implemented by using software, hardware, firmware, or any combination thereof. When software is used to implement the foregoing embodiments, all or a part of the foregoing embodiments may be implemented in a form of a computer program product. The computer program product that provides a program development platform includes one or more computer instructions. When these computer program instructions are loaded and executed on the compute device, all or some functions of the data access method provided in embodiments of this application are implemented.

The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium stores the computer program instructions that provide the program development platform.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

Optionally, for a structure of the at least one compute device included in the compute device cluster, refer to the compute device 1100 shown in FIG. 11. Memories 1102 in the one or more compute devices 1100 in the compute device cluster may store same instructions for performing the data access method.

In some possible implementations, alternatively, the memories 1102 in the one or more compute devices 1100 in the compute device cluster may separately store a part of instructions for performing the data access method. In other words, a combination of the one or more compute devices 1100 may jointly execute the instructions for performing the data access method.

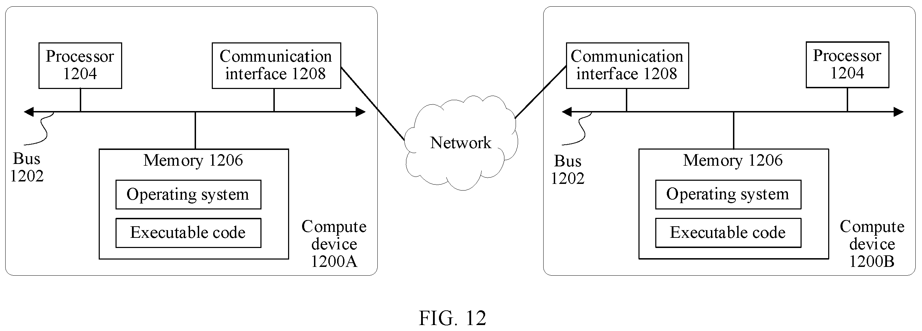

In some possible implementations, the one or more compute devices in the compute device cluster may be connected over a network. The network may be a wide area network, a local area network, or the like. FIG. 12 shows a possible implementation. As shown in FIG. 12, two compute devices 1200A and 1200B are connected over a network. Specifically, each compute device is connected to the network through a communication port in the compute device. In such a possible implementation, the compute devices 1200A and 1200B each include a bus 1202, a processor 1204, a memory 1206, and a communication port 1208. The memory 1206 in the compute device 1200A stores instructions for performing a function of a first compute node. In addition, the memory 1206 in the compute device 1200B stores instructions for performing a function of a second compute node.

It should be understood that functions of the compute device 1200A shown in FIG. 12 may alternatively be completed by a plurality of compute devices 1200. Similarly, functions of the compute device 1200B may alternatively be completed by the plurality of compute devices 1200. In addition, a deployment manner of the modules configured to implement the data access method in the compute device may alternatively be adjusted based on an application requirement.

An embodiment of this application further provides a computer-readable storage medium. The computer-readable storage medium is a non-volatile computer-readable storage medium. The computer-readable storage medium includes program instructions. When the program instructions are run on a compute device, the compute device is caused to implement the data access method provided in embodiments of this application.

An embodiment of this application further provides a computer program product including instructions. When the computer program product runs on a computer, the computer is caused to implement the data access method provided in embodiments of this application. In an implementation, the computer program product is an operating system running on a processor of the computer device.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

It should be noted that information (including but not limited to user equipment information, user personal information, and the like), data (including but not limited to data for analysis, data for storage, data for display, and the like), and signals in this application are all authorized by users or fully authorized by all parties, and collection, use, and processing of related data need to comply with related laws, regulations, and standards of related countries and regions. For example, original data, executable code, and the like in this application are obtained under full authorization.

In embodiments of this application, the terms "first", "second", and "third" are merely used for description, but cannot be understood as an indication or implication of relative importance. The term "at least one" means one or more, and the term "a plurality of" means two or more, unless otherwise expressly limited.

The term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

The foregoing descriptions are merely optional embodiments of this application, but are not intended to limit this application. Any modification, equivalent replacement, improvement, or the like made within the concept and principle of this application shall fall within the protection scope of this application.

## Claims

1. A data access method, wherein the method is applied to a processor of a first compute node, the first compute node further comprises a memory, and the method comprises:
obtaining, by the processor, an access request of a first process, wherein the access request indicates an access process other than memory access;
allocating, by the processor, an access memory in the memory based on the access request, and providing a physical address of the access memory for the first process; and
obtaining, by the processor, an access operation performed by the first process on the access memory based on the physical address, and responding to the access operation.

2. The method according to claim 1, wherein the first process is a process running on the processor, and/or the first process is a process running on a second compute node.

3. The method according to claim 2, wherein in response to the first process being the process running on the second compute node, allocating, by the processor, the access memory in the memory based on the access request comprises:
when the first compute node and the second compute node are connected via a communication bus that supports memory semantics, allocating, by the processor, the access memory in the memory based on the access request.

4. The method according to claim 2 or 3, wherein the first compute node and the second compute node are connected via the communication bus that supports memory semantics, and responding to, by the processor, the access operation comprises:
responding to, by the processor, the access operation based on the communication bus.

5. The method according to any one of claims 1 to 4, wherein the access request indicates to access a file stored on the first compute node, and/or the access request indicates to transmit data with a second process running on the processor.

6. The method according to claim 5, wherein in response to the access request indicating to access the file stored on the first compute node, responding to, by the processor, the access operation comprises:
reading, by the processor, the file from a persistent storage medium into the access memory, performing an operation indicated by the access operation on the file stored in the access memory, and updating the file stored in the persistent storage medium based on a result of the operation.

7. The method according to claim 5, wherein in response to the access request indicating to transmit the data to the second process running on the processor, responding to, by the processor, the access operation comprises:
when the access operation indicates to receive target data from the second process, indicating, by the processor, the second process to store the target data in the access memory, and provide the target data for the first process based on the access operation; or
when the access operation indicates to transmit target data to the second process, storing, by the processor, the target data in the access memory, and providing the target data for the second process.

8. The method according to any one of claims 1 to 7, wherein in response to the first process being the process running on the second compute node, before providing, by the processor, the physical address of the access memory for the first process, the method further comprises:
configuring, by the processor, the second process, and establishing a communication connection between the second process and the first process; and
providing, by the processor, the physical address of the access memory for the first process comprises:
providing, by the processor, the physical address for the first process through the second process.

9. The method according to claim 8, wherein providing, by the second process, the physical address for the first process comprises:
sending, by the second process, the physical address to the first process after receiving the physical address and receiving a query request sent by the first process.

10. The method according to any one of claims 1 to 9, wherein after allocating, by the processor, the access memory in the memory, the method further comprises:
configuring, by the processor, access permission of the first process for the access memory; and
responding to, by the processor, the access operation comprises:
responding to, by the processor, the access operation when the access operation satisfies the access permission.

11. The method according to claim 10, wherein
when the physical address of the access memory is provided for a plurality of processes, the first process has read-only permission for the access memory; or
when the physical address of the access memory is provided for one process, the first process has read/write permission for the access memory.

12. The method according to claim 10, wherein the access permission is indicated by attribute information of the access request.

13. A data access apparatus, wherein the apparatus is used in a processor of a first compute node, the first compute node further comprises a memory, and the apparatus comprises:
an interaction module, configured to obtain an access request of a first process, wherein the access request indicates an access process other than memory access;
an allocation module, configured to allocate an access memory in the memory based on the access request, and provide a physical address of the access memory for the first process; and
a response module, configured to obtain an access operation performed by the first process on the access memory based on the physical address, and respond to the access operation.

14. The apparatus according to claim 13, wherein the first process is a process running on the processor, and/or the first process is a process running on a second compute node.

15. The apparatus according to claim 14, wherein in response to the first process being the process running on the second compute node, the allocation module is specifically configured to:
when the first compute node and the second compute node are connected via a communication bus that supports memory semantics, allocate the access memory in the memory based on the access request.

16. The apparatus according to claim 14 or 15, wherein the first compute node and the second compute node are connected via the communication bus that supports memory semantics, and the response module is specifically configured to:
respond to the access operation based on the communication bus.

17. The apparatus according to any one of claims 13 to 16, wherein the access request indicates to access a file stored on the first compute node, and/or the access request indicates to transmit data with a second process running on the processor.

18. The apparatus according to claim 17, wherein in response to the access request indicating to access the file stored on the first compute node, the response module is specifically configured to:
read the file from a persistent storage medium into the access memory, perform an operation indicated by the access operation on the file stored in the access memory, and update the file stored in the persistent storage medium based on a result of the operation.

19. The apparatus according to claim 17, wherein in response to the access request indicating to transmit the data to the second process running on the processor, the response module is specifically configured to:
when the access operation indicates to receive target data from the second process, indicate the second process to store the target data in the access memory, and provide the target data for the first process based on the access operation; or
when the access operation indicates to transmit target data to the second process, store the target data in the access memory, and provide the target data for the second process.

20. The apparatus according to any one of claims 13 to 19, wherein in response to the first process being the process running on the second compute node, the allocation module is specifically configured to:
configure the second process, and establish a communication connection between the second process and the first process; and
provide the physical address for the first process through the second process.

21. The apparatus according to claim 20, wherein the allocation module is specifically configured to:
send the physical address to the first process after receiving the physical address and receiving a query request sent by the first process.

22. The apparatus according to any one of claims 13 to 21, wherein the allocation module is specifically configured to:
configure access permission of the first process for the access memory; and
the response module is specifically configured to:
respond to the access operation when the access operation satisfies the access permission.

23. The apparatus according to claim 22, wherein
when the physical address of the access memory is provided for a plurality of processes, the first process has read-only permission for the access memory; or
when the physical address of the access memory is provided for one process, the first process has read/write permission for the access memory.

24. The apparatus according to claim 22, wherein the access permission is indicated by attribute information of the access request.

25. A compute device, comprising a processor and a memory, wherein the memory stores program instructions, and the processor runs the program instructions, so that the compute device performs the method according to any one of claims 1 to 12.

26. A computer-readable storage medium, comprising program instructions, wherein when the program instructions are run on a compute device, the compute device is caused to perform the method according to any one of claims 1 to 12.

27. A computer program product comprising instructions, wherein when the instructions are run by a computer device, the computer device is caused to perform the method according to any one of claims 1 to 12.

28. The computer program product according to claim 27, wherein the computer program product is an operating system running on a processor of the computer device.
